# FASCICULE DE BREVET EUROPEEN

(11) **EP 2 170 585 B1**
(45) Date de publication et mention de la délivrance du brevet: **13.11.2013**
(21) Numéro de dépôt: 08774484.3
(22) Date de dépôt: 27.06.2008
(51) Int. Cl.: B29C 65/00, B29C 70/30, F16C 3/02, F16C 7/00, B29C 65/02, B29C 65/48, B29C 65/56

(54) **BIELLE STRUCTURALE EN MATERIAU COMPOSITE ET PROCEDE DE REALISATION D 'UNE TELLE BIELLE**
STRUKTURVERBINDUNGSSTANGE AUS EINEM VERBUNDWERKSTOFF UND VERFAHREN ZUR HERSTELLUNG SOLCH EINER VERBINDUNGSSTANGE
STRUCTURAL CONNECTING ROD MADE OF A COMPOSITE AND PROCESS FOR PRODUCING SUCH A CONNECTING ROD

(30) Priorité: 28.06.2007 FR 0704656
(43) Date de publication de la demande: 07.04.2010
(73) Titulaire: European Aeronautic Defence and Space Company EADS France, 75781 Paris Cedex 16 (FR); Composites Atlantic Limited, Lunenburg, NS BOJ-2CO (CA)
(72) Inventeur: CAVALIERE, Frédérick, F-78180 Montigny-le-Bretonneux (FR); GUITTON, Maurice, Lunenburg, Nova Scotia (CA); BLANC, Olivier, Rosemere, Québec 17A-3N5 (CA); BARIL, Claude, Laval, Québec H7E-2N5 (CA)
(74) Mandataire: Schmit, Christian Norbert Marie
(86) Numéro de dépôt international: PCT/EP2008/058325
(87) Numéro de publication internationale: WO 2009/000925

(56) Documents cités:
- WO-A2-2008/119491
- FR-A- 2 654 483
- FR-A- 2 705 610

## Description

La présente invention appartient au domaine des pièces structurales en matériau composite.

Plus particulièrement l'invention concerne une bielle structurale en matériau composite et son procédé de fabrication telle que les bielles structurales utilisées dans la réalisation de structures aéronautiques en raison de leur bilan résistance structurale sur masse favorable.

Une bielle structurale est un élément de forme allongée destiné à reprendre des efforts de traction et ou de compression suivant un axe principal de la bielle qui correspond à la direction dans laquelle la bielle est allongée.

Le plus souvent une bielle comporte à ses extrémités des chapes de reprise des efforts, de préférence adaptées pour transmettre les efforts suivant l'axe de la bielle et pour éviter de générer des efforts qui pourraient engendrer une flexion de la bielle, flexion à laquelle elle n'est pas adaptée.

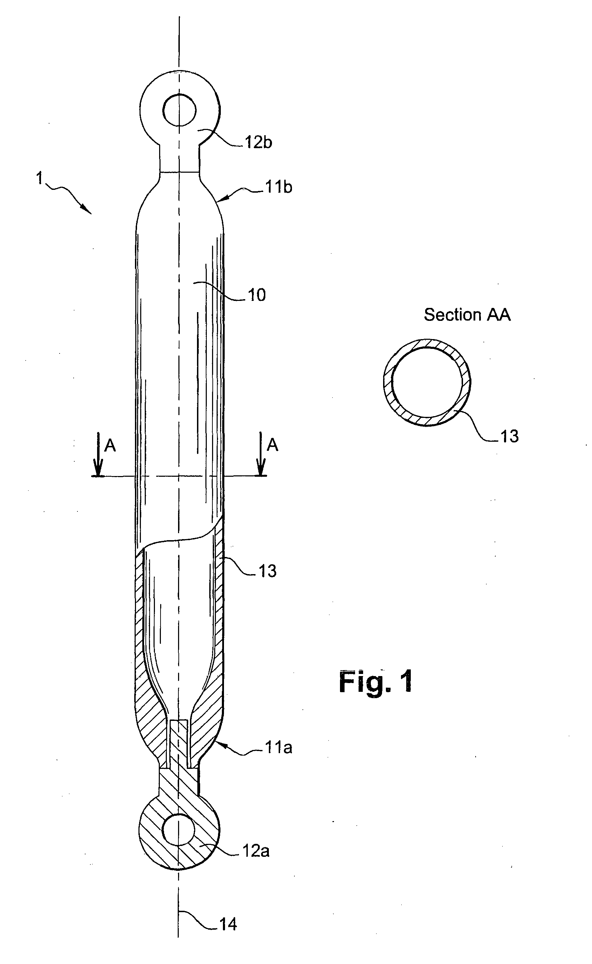

La figure 1 représente une bielle conventionnelle.

La bielle 1 comporte une partie centrale 10, le corps de la bielle, sensiblement cylindrique, de section le plus souvent circulaire, et d'axe 14.

A chacune de ses extrémités la bielle comporte une zone 11a, 11b dans laquelle la section extérieure de la bielle diminue progressivement depuis la partie centrale 10 en allant vers l'extrémité de la bielle. Ces zones d'extrémité 11a, 11b sont alors désignées par le terme rétreint.

A l'extrémité de chaque rétreint des éléments de fixation 12a, 12b, par exemple des chapes équipées de rotules, sont rapportés et solidaires de la bielle pour que la bielle puisse être assemblée à une structure à la résistance de laquelle elle doit participer.

La bielle est calculée en fonction des efforts à transmettre et la partie centrale et généralement creuse, comme illustré sur la partie en écorché partiel de la bielle sur la figure 1 ainsi que sur la section de ladite figure, afin de répartir la matière résistante de la bielle à la périphérie du corps de celle-ci de telle sorte que la bielle ait une bonne tenue aux phénomènes de flambage lorsque la bielle est soumise à des efforts de compression, sans pénaliser la masse de la bielle.

La paroi 13 de la partie centrale de la bielle 1 est réalisée, pour des applications aéronautiques au moins, le plus souvent dans un alliage léger à base d'aluminium ou en matériau composite comportant des fibres longues, par exemple des fibres de verre, de Kevlar (R) ou carbone, maintenues dans une matrice en résine organique durcie, par exemple une résine époxy.

Aujourd'hui les matériaux composites sont de plus en plus utilisés en raison d'un certain nombre d'avantages :
- bilan de masse favorable pour une résistance donnée ;
- possibilité de favoriser l'orientation des fibres pour tenir compte du sens privilégié des efforts à transmettre ;
- meilleur comportement en fatigue que le métal.

Divers procédés sont connus pour réaliser de telles bielles en matériau composite, soit par des procédés utilisant des fibres préimprégnées de résine avant leurs mises en forme, soit par des procédés utilisant des fibres sèches puis imprégnées après leurs mises en forme au cours d'une étape de transfert de résine suivant un procédé dit RTM.

Afin de réaliser la partie en composite de la bielle, au moins le corps et les rétreints et éventuellement des chapes d'extrémité, il est nécessaire de disposer d'un noyau ou mandrin suffisamment rigide pour déposer et maintenir les fibres, préimprégnées ou non, avec la forme souhaitée jusqu'à ce que la résine du matériau composite ait durci en général par polymérisation au cours d'une cure thermique de durcissement.

Lorsque la résine a durci, c'est à dire que le matériau composite à atteint une rigidité suffisante au regard de la résistance recherchée, il est en général préféré de retirer le noyau qui n'a plus d'utilité et qui peut représenter une masse non négligeable ou présenter des caractéristiques physico-chimiques, par exemple des dégagements de fumées en cas de feu, incompatibles avec l'utilisation souhaitée de la bielle.

Du fait de sa forme il n'est généralement pas aisé d'extraire le noyau de la bielle.

Le noyau doit donc être conçu pour permettre son extraction, soit par déformation soit par destruction.

Les noyaux extractibles par déformation sont généralement réalisés en élastomère, en une ou plusieurs parties pleines ou creuses. De tels noyaux ont l'avantage de pouvoir être utilisés plusieurs fois mais leur usage reste complexe pour des pièces devant être réalisées en relativement grande quantité et ils nécessitent des précautions particulières pour obtenir la forme et les dimensions de la bielle en raison de leur manque de rigidité naturelle.

Les noyaux détruits pour être extraits sont par exemple des noyaux pouvant être dissout chimiquement ou fondus par élévation au dessus d'une température de fusion du matériau utilisé pour réaliser ledit noyau. De tels noyaux peuvent être réalisés avec des dimensions bien maîtrisées mais ils sont souvent lourds et fragiles à utiliser et, par conception, ils ne servent qu'une fois pour réaliser une bielle.

Le brevet français publié sous le N° 2705610, correspondant également au brevet US 5428896, décrit la réalisation d'une bielle utilisant un noyau à usage unique autour duquel est réalisé une bielle en matériau composite par enroulement filamentaire d'une fibre préimprégnée.

Après le durcissement du matériau composite, le noyau est dissout dans un solvant.

Un tel procédé de réalisation d'une bielle, outre les problèmes intrinsèques à la réalisation, la manipulation et l'élimination du noyau, vient du fait que les fibres doivent être déposées avec certains angles par rapport à l'axe de la bielle au cours de l'opération de bobinage et que, en raison de ces angles à respecter, il n'est pas possible d'orienter des fibres de la manière la plus optimale en théorie, c'est à dire parallèlement à l'axe de la bielle.

Il ressort donc un intérêt essentiel à définir une structure de bielle et un procédé de réalisation de bielles en matériau composite qui soient simplifiés tout en donnant des bielles de bonnes performances mécaniques et d'un coût diminué.

Pour cela l'invention propose une bielle structurale, c'est à dire une bielle de forme allongée suivant un axe, apte à résister à des efforts de traction compression orientés dans le sens de l'axe, comportant une zone centrale creuse, dite corps, de section droite par rapport à l'axe fermée, réalisée essentiellement avec un matériau composite comportant des fibres maintenues dans une résine durcie. Le corps est situé entre une première extrémité, comportant des premiers moyens de fixation de la bielle à une structure, et une seconde extrémité, comportant des seconds moyens de fixation de la bielle à une structure.

La bielle structurale comporte, au moins pour une partie structurale du corps, au moins deux coquilles assemblées.

Chaque coquille :
- s'étend suivant la direction de l'axe sur une longueur au moins égale à une longueur du corps de la bielle ;
- présente une section droite par rapport à l'axe ouverte déterminant une face intérieure, concave, et une face extérieure, convexe, sur une face opposée à la face intérieure concave ;
- comporte une première surface d'appui, sur une face de la coquille, au niveau d'un premier prolongement d'un bord de la coquille ;
- comporte une seconde surface d'appui, sur une autre face de la coquille, au niveau d'un second prolongement d'un bord de la coquille, second prolongement opposé au premier prolongement sur une section droite de la coquille.

En outre chaque coquille d'une bielle est assemblée avec une coquille voisine de telle sorte que la première surface d'appui d'une coquille se trouve en appui sur la seconde surface d'appui de la coquille voisine, les deux ou plusieurs coquilles assemblées constituant le corps de la bielle et créant une section droite fermée qui assure entre autre la stabilité structurale de la bielle aux efforts de compression et flambage.

Afin d'obtenir une bielle dont les caractéristiques structurales soient relativement homogènes, de préférence la première surface d'appui de chaque coquille est une surface d'appui extérieure située sur la face extérieure de la coquille considérée et la seconde surface d'appui de chaque coquille est une surface d'appui intérieure située sur la face intérieure de la coquille considérée.

Pour éviter des opérations d'assemblage et obtenir une bielle de grande intégrité, avantageusement une, deux ou plusieurs coquilles comportent chacune une ou des chapes en matériau composite solidaires de ladite coquille.

De préférence pour une meilleure résistance de la bielle assemblée une ou des chapes de la bielle sont obtenues par l'assemblage d'au moins deux chapes solidaires de coquilles différentes.

Dans une forme particulièrement avantageuse, la bielle structurale comporte des coquilles identiques à des détails de réalisation près.

Dans un mode préféré de réalisation de la bielle structurale en raison de sa simplicité relative et de ses qualités structurales, la bielle comporte deux coquilles sensiblement identiques, chaque coquille ayant deux chapes à chaque extrémité et chaque chape d'une coquille coopérant avec une chape de l'autre coquille pour former une chape de la bielle.

La bielle structurale en matériau composite est réalisée avec des coquilles dans lesquelles la résine du matériau composite est une résine dite thermodurcissable, c'est à dire qui acquiert ses propriétés mécaniques au cours une opération de cuisson, ou bien une résine dite thermoplastique, c'est à dire apte à être déformée au-dessus d'une certaine température et à reprendre ses propriétés mécaniques après une phase de refroidissement.

Dans la bielle structurale les coquilles sont maintenues assemblées soit par une polymérisation simultanée de la résine (co-cuisson) des coquilles lorsque cette polymérisation simultanée est possible, soit par collage, soit par soudage, ou encore par des éléments mécaniques de fixation tels que des rivets.

L'invention concerne également un procédé particulièrement avantageux de réalisation d'une telle bielle qui permet d'éviter la réalisation d'une forme fermée en une seule étape et d'appliquer aisément les techniques connues pour la réalisation de formes ouvertes aux coquilles de la bielle.

Ainsi le procédé de réalisation d'une bielle structurale conforme à la bielle suivant l'invention comporte une étape de réalisation d'au moins deux coquilles :
- ayant une extension suivant la direction de l'axe sur une longueur au moins égale à une longueur du corps de la bielle ;
- présentant une section droite par rapport à l'axe ouverte déterminant une face intérieure, concave, et une face extérieure, convexe, sur une face opposée à la face intérieure concave ;
- comportant une première surface d'appui, sur une face de la coquille, au niveau d'un premier prolongement d'un bord de la coquille ;
- comportant une seconde surface d'appui, sur une autre face de la coquille, au niveau d'un second prolongement d'un bord de la coquille, second prolongement opposé au premier prolongement sur une section droite de la coquille ;
et une étape d'assemblage d'au moins deux coquilles, au cours de laquelle une coquille est assemblée avec une coquille voisine de telle sorte que sa première surface d'appui se trouve en appui sur la seconde surface d'appui de la coquille voisine, de telle sorte que les deux ou plusieurs coquilles assemblées constituent le corps de la bielle et créent une section droite fermée.

Suivant un premier mode de mise en oeuvre du procédé, pour l'étape de réalisation des coquilles, les coquilles sont réalisées avec des fibres préimprégnées déposées sur une forme correspondant à la forme de la coquille à réaliser, et la résine n'est pas polymérisée avant assemblage des coquilles.

Suivant un deuxième mode de mise en oeuvre du procédé, pour l'étape de réalisation des coquilles, les coquilles sont réalisées par polymérisation de fibres préimprégnées d'une résine durcissant par polymérisation déposées sur une forme correspondant à la forme de la coquille à réaliser.

Dans une autre manière de mettre en oeuvre ledit deuxième mode, pour l'étape de réalisation des coquilles, les coquilles sont réalisées par polymérisation d'une résine durcissant par polymérisation après avoir été transférée dans une préforme en fibres sèches déposées dans un moule.

Suivant un troisième mode de mise en oeuvre du procédé, pour l'étape de réalisation des coquilles, une plaque plane est réalisée et découpées en bandes larges (flans). Ces flans sont formés ou thermoformés sur un poinçon pour leur donner la forme des coquilles. La résine peut être une résine thermodurcissable ou thermoplastique.

Suivant un premier mode de mise en oeuvre du procédé, pour l'étape d'assemblage des coquilles, applicable lorsque les coquilles sont réalisées dans un matériau composite utilisant une résine durcissant par polymérisation, les coquilles sont assemblées par un procédé comportant une phase de polymérisation simultanée des coquilles ayant des surfaces d'appui en contact.

Suivant un deuxième mode de mise en oeuvre du procédé, pour l'étape d'assemblage des coquilles, applicable lorsque les coquilles sont réalisées dans un matériau composite comportant des propriétés thermoplastiques, les coquilles sont assemblées par un procédé soudage thermoplastique.

Suivant d'autres modes de mise en oeuvre du procédé, pour l'étape de réalisation des coquilles, les coquilles sont également assemblées par collage ou par la pose de fixations mécaniques, les différents procédés d'assemblage pouvant être combinés pour une meilleure résistance de l'assemblage lorsque les procédés sont compatibles entre eux et avec le matériau composite des coquilles.

La description détaillée d'un mode réalisation de l'invention et d'alternatives à ce mode de réalisation est faite en référence aux dessins qui représentent :
- figure 1 : déjà citée, un exemple de bielle structurale suivant l'art antérieur ;
- figure 2 : une vue d'ensemble en perspective d'une bielle suivant l'invention ;
- figure 3a et figure 3b : des vues en perspectives de deux coquilles formant la bielle de la figure 2, avant assemblage ;
- figure 4a : une section droite des coquilles, avant assemblage, d'une bielle formée de deux coquilles suivant l'invention ;
- figure 4b : une section droite des coquilles de la figure 4a après assemblage par collage ;
- figure 4c : une section droite des coquilles de la figure 4a après assemblage par cuisson simultanée ;
- figure 5a : une vue de profil d'une partie d'une bielle suivant l'invention ;
- figure 5b : une vue de face d'une partie de bielle suivant l'invention ;
- figure 5c une coupe axiale correspondant à la vue de la figure 5b d'une partie de bielle suivant l'invention ;
- figure 6 : une section droite de coquilles assemblées suivant un mode alternatif de réalisation de l'invention ;
- figure 7a et figure 7b : des sections droites avant et après assemblage des coquilles suivant un mode de réalisation de l'invention d'une bielle formée avec trois coquilles.

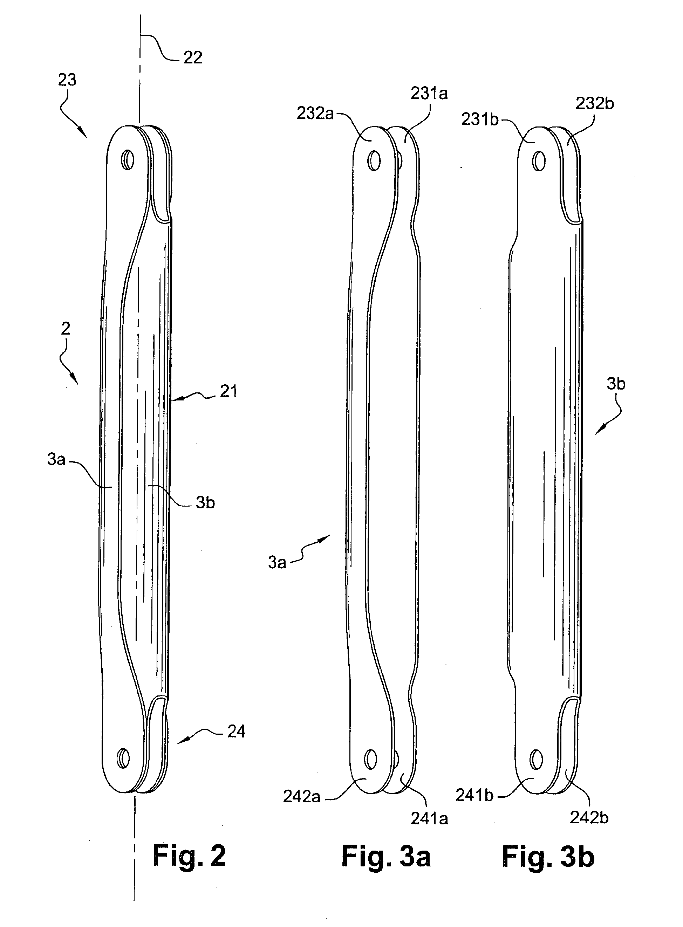

Une bielle structurale 2 en matériau composite suivant l'invention, illustrée sur la figure 2, comporte:
- une zone centrale 21 sensiblement cylindrique, dont les génératrices sont parallèles à un axe 22 orienté suivant une dimension de la bielle 2 correspondant à sa plus grande longueur, creuse et de section droite par rapport à l'axe 22 fermée ;
- une première extrémité 23 comportant des premiers moyens de fixation de la bielle à une structure (non représentée) ;
- une seconde extrémité 24 comportant également des seconds moyens de fixation de la bielle à une structure.

Les premiers moyens de fixation et les seconds moyens de fixation correspondent dans l'exemple de bielle structurale décrit à deux chapes doubles par extrémité de ladite bielle, chaque chape ayant une partie de préférence sensiblement plate en matériau composite pourvue d'un trou apte à permettre la mise en place d'un élément de fixation (non représenté).

La bielle 2 comporte une première coquille 3a et une seconde coquille 3b, présentées séparées sur la figure 3a et sur la figure 3b, qui sont assemblées pour former la partie structurale de ladite bielle présentée sur la figure 2.

Chaque coquille 3a, 3b correspond sensiblement à une demi-bielle qui serait obtenue en coupant la bielle 2 en deux parties dans le sens de la longueur de ladite bielle suivant la direction de son axe 22, avec toutefois des dimensions de leurs sections droites par rapport à l'axe 22 sensiblement augmentées au niveau des bords des dites sections de sorte que les dites coquilles présentent des surfaces qui se recouvrent lorsque les coquilles sont placées pour constituer la bielle 2.

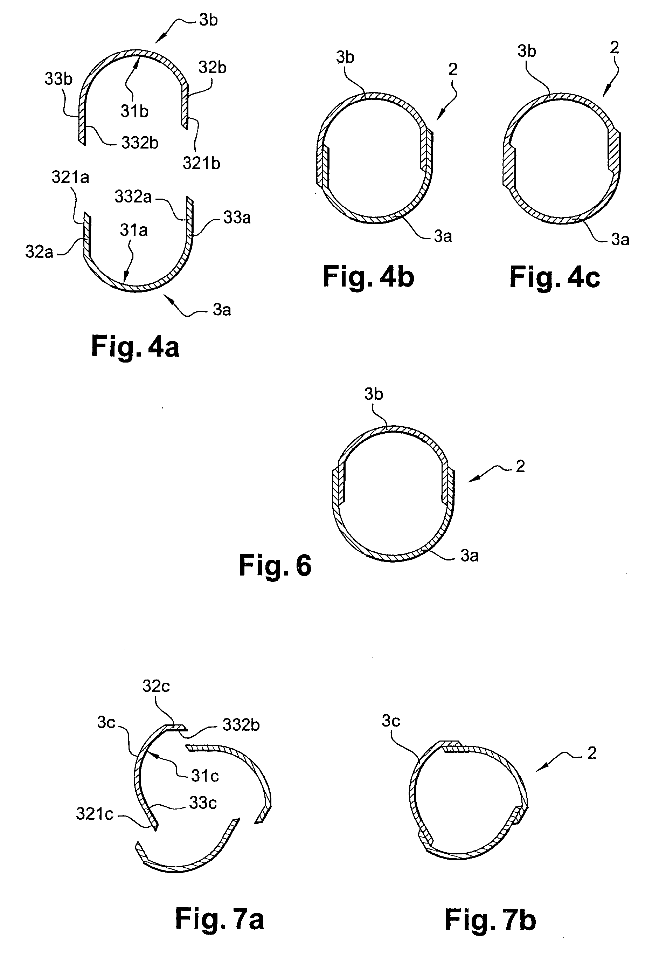

En pratique chaque coquille 3a, 3b présente une section droite, perpendiculaire à l'axe 22 de la bielle 2 dont ladite coquille est une partie, dont la forme est ouverte et présente sensiblement une forme en **U**, comme illustré sur la figure 4a, déterminant une face intérieure concave 31a, respectivement 31b, dont la courbure est en accord avec un rayon de la bielle 2 et deux prolongements 32a, 33a, respectivement 32b, 33b, qui se développent sur les bords de la section de la coquille, suivant des directions parallèles entre elles.

Chaque coquille comporte également une face extérieure convexe opposée à la face intérieure concave qui correspond essentiellement à la surface extérieure de la bielle 2 lorsque les deux coquilles sont assemblées pour constituer ladite bielle.

Les deux coquilles 3a, 3b sont assemblées face concave 31a de la première coquille 3a en vis à vis de la face concave 31b de la seconde coquille 3b de telle sorte que des côtés des prolongements 32a, 33a qui étendent la première coquille 3a sur ses bords se trouvent en appui sur des côtés des prolongements 32b, 33b qui étendent la seconde coquille 3b sur ses bords.

Plus précisément une surface d'appui extérieure 321a d'un, 32a, des deux prolongements de la première coquille 3a, c'est à dire la surface d'appui qui se situe du côté opposé au côté concave 31a de ladite première coquille, est en contact lorsque les coquilles sont assemblées avec une surface d'appui intérieure 332b d'un, 33b, du prolongement de la seconde coquille 3b, c'est à dire une surface d'appui qui se situe du côté concave 31b de ladite seconde coquille, prolongement qui se trouve sur le même côté de la bielle 2 que le prolongement 32a considéré de la première coquille.

De même une surface d'appui intérieure 332a de l'autre prolongement 33a de la première coquille 3a est en contact avec une surface d'appui extérieure 321b de l'autre prolongement 32b de la seconde coquille 3b.

Les surfaces d'appui sont avantageusement des surfaces planes ce qui permet une mise en place aisée des coquilles et une possibilité de mouvement relatif entre les coquilles apte à faciliter un repositionnement lors de l'assemblage.

Cependant les surfaces d'appui peuvent être de formes quelconques sous réserve que les surfaces en contact lorsque la bielle est réalisée par l'assemblage des coquilles ont des formes aptes à coopérer pour permettre l'assemblage et avec des recouvrements suffisant pour garantir la résistance de l'assemblage.

Ce positionnement relatif des deux coquilles 3a, 3b est possible par le fait que les dites deux coquilles ont des sections identiques ou pour le moins qu'une distance séparant la surface intérieure 332a, 332b, d'un prolongement 33a, respectivement 33b, d'une coquille 3a, respectivement 3b, à la surface extérieure 321a, respectivement 321b, de l'autre prolongement 32a, respectivement 32b, de ladite coquille 3a, respectivement 3b, est identique pour les deux coquilles 3a et 3b assemblées pour former la bielle 2 dont une section droite courante est représentée sur les figures 4b ou 4c.

Le contact entre les faces des deux coquilles 3a, 3b, tel qu'il vient d'être décrit est avantageusement réalisé sur toute la longueur de la bielle 2 de sorte que les dites deux coquilles puissent être solidarisées sur le maximum de longueur de la bielle réalisée par l'assemblage des coquilles.

De préférence, pour obtenir une bielle dont les caractéristiques soient les plus homogènes possibles et pour en simplifier la fabrication, les deux coquilles sont identiques.

Avantageusement chaque coquille 3a, 3b, comporte, comme illustré sur les figures 3a, 3b, à chacune de ses extrémités deux chapes 231a, 232a, 241a, 242a, respectivement 231b, 232b, 241b, 242b, de telle sorte que chaque chape d'une coquille présente une surface en contact avec une surface d'une chape de l'autre coquille lorsque les deux coquilles sont assemblées.

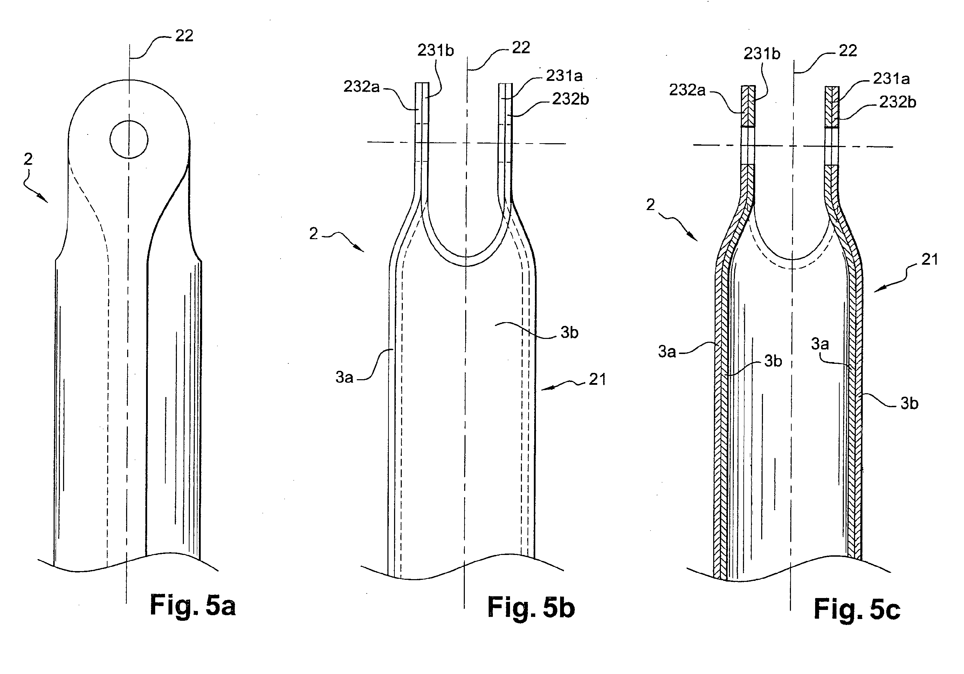

Suivant ce mode de réalisation, comme le montre pour une extrémité de la bielle 2 la figure 5b et la coupe de la figure 5c, chaque chape de la bielle 2 correspond à une combinaison de deux chapes, une chape 231a, 232a, de la première coquille 3a et une chape 232b, respectivement 231b, de la seconde coquille 3b. Ainsi non seulement chaque chape de la bielle 2 se trouve solidaire des deux coquilles 3a, 3b, mais en outre l'épaisseur des dites chapes se trouvent augmentées, ce qui permet de passer des efforts de matage augmentés dans les trous de fixation. Lorsque l'épaisseur au droit des trous de fixation n'est pas suffisante pour passer les efforts de matage attendus, avantageusement le nombre de plis structuraux des chapes de chaque coquille est augmenté localement.

Lorsque les efforts subits par la bielle ne nécessitent pas un tel épaississement des chapes des bielles, il est également possible de réaliser des coquilles comportant un nombre réduit de chapes.

Par exemple une première coquille 3a ne comportant qu'une seule chape 231a à une extrémité et une seconde coquille 3b ne comportant qu'une seule chape 231b à une extrémité correspondante de sorte que les chapes des coquilles assemblées constituent des chapes non doublées en épaisseur pour la bielle, ou par exemple une première coquille 3a comportant deux chapes 231a, 232a à une extrémité et une seconde coquille ne comportant pas de chape à l'extrémité correspondante.

Ces exemples, non illustrés sur les dessins, ne sont pas limitatifs de l'agencement possible sur les coquilles des chapes ou d'autres moyens de fixation de la bielle.

Suivant l'agencement de la bielle 2 tel qu'il vient d'être décrit, il est possible de réaliser séparément les deux coquilles 3a, 3b, destinées à former ladite bielle, ce qui s'avère particulièrement utile lorsque la bielle est réalisée en matériau composite car les coquilles sont des formes ouvertes qui sont beaucoup plus simples à réaliser que des formes fermées, c'est à dire comportant un volume intérieur creux comme dans le cas d'une bielle conventionnelle ou dans la bielle 2 obtenue après assemblage des coquilles.

Ainsi pour réaliser une bielle 2 en matériau composite suivant l'invention une première étape consiste à réaliser des coquilles 3a, 3b, dont la géométrie, adaptée aux dimensions de la bielle, est conforme aux coquilles décrites précédemment.

De telles coquilles 3a, 3b, en matériau composite peuvent être réalisées séparément en utilisant un des différents procédés connus pour la mise en oeuvre des matériaux composites, en particulier au moyen de moules comportant des formes et éventuellement des contre-formes.

Suivant un premier exemple de réalisation, chaque coquille 3a, 3b, est réalisée par dépôt de fibres préimprégnées sur un outillage poinçon, par exemple un outillage convexe ayant la forme de la partie concave de ladite coquille. Les fibres préimprégnées peuvent être déposées sous différentes formes telles que mèches, nappes unidirectionnelles ou encore nappes tissées.

Lorsque les fibres préimprégnées ont été déposées, suivant les orientations et les quantités souhaitées, sur l'outillage, la résine est le cas échéant, lorsque le procédé mis en oeuvre le prévoit, durcie de manière conventionnelle suivant les procédés connus de réalisation des pièces en matériaux composites, le plus souvent par polymérisation à chaud sous pression.

Suivant un deuxième exemple de réalisation, des fibres sèches sont déposées suivant des orientations et quantités souhaitées pour créer une préforme en fibres sèches puis la préforme est placée dans un moule reproduisant les volumes de la coquille pour être imprégnée d'une résine avant que la résine ne soit durcie. Dans ce cas l'absence d'un noyau central non démoulable permet la mise en oeuvre du procédé RTM de transfert de résine de manière conventionnelle et sans difficulté particulière.

Suivant un troisième exemple de réalisation, les coquilles sont réalisées à partir d'un flan plat réalisé en matériau composite thermoformable, c'est à dire un matériau composite présentant une rigidité suffisante pour être manipulé à température ambiante mais dont la résine devient plastiquement déformable lorsque sa température est élevée à une valeur suffisante dite température de plasticité, par formage à la température de plasticité au moyen d'une matrice ayant la forme de la coquille et d'un poinçon ou d'une vessie qui vient appliquer le flan sur le poinçon.

Le flan peut être réalisé avec un matériau composite dont la résine est connue pour ses propriétés de plasticité lorsqu'elle est chauffée à une certaine température, ou bien avec un matériau composite imprégné d'une résine destinée à durcir par polymérisation, ou bien avec un matériau composite imprégné d'une résine destinée à durcir par polymérisation mais dont la polymérisation a été interrompue avant le durcissement complet pour conserver au matériau des caractéristiques thermoplastiques lors du formage après lequel la polymérisation est continuée pour obtenir le durcissement définitif recherché de la résine.

Pour chacun de ces procédés dont la liste n'est pas limitative, la réalisation d'une coquille de forme ouverte permet sans difficulté que les fibres soient déposées suivant les techniques conventionnelles ou que les flans soient réalisés de telle sorte que lesdites fibres sont orientées de manière optimale par rapport aux efforts prévus dans la structure de la bielle.

Lorsqu'une coquille est réalisée suivant un procédé quelconque de réalisation, elle est démoulée ou extraite de l'outillage avec lequel elle a été réalisée en général à un stade d'ébauche.

La dite ébauche est alors en mesure d'être soumise à des opérations de finition, en particulier des opérations de détourage qui consiste, si besoin, à ajuster les bords de la coquilles aux dimensions voulues. En particulier les formes extérieures des chapes aux extrémités de la coquille sont réalisées par exemple par des opérations d'usinage.

Avantageusement les ouvertures dans les chapes ne sont pas réalisées à ce stade de réalisation de la coquille ou seulement sous la forme d'avant-trous pour permettre le positionnement exact des coquilles l'une par rapport à l'autre lors de l'opération d'assemblage, et permettre un alésage précis des trous des chapes, en diamètre et en alignement, lorsque les deux coquilles 3a, 3b, de la bielle 2 ont été assemblées.

Dans une seconde étape les deux coquilles 3a, 3b, dont les dimensions sont coordonnées, avantageusement, comme déjà décrit les deux coquilles sont géométriquement sensiblement identiques, sont assemblées pour former la bielle 2.

Les surfaces d'appui entre les deux coquilles correspondent aux surfaces 321a, 332b, 321b, 332a, définies par des longueurs sur lesquelles les prolongements 32a et 33b d'une part et 32b, 33a d'autre part se recouvrent conjuguées avec la longueur de la bielle 2 sur laquelle s'étend le recouvrement des dits prolongements. Ces surfaces sont donc déterminées lors de la conception de la bielle en agissant sur les longueurs de recouvrement des prolongements, longueurs qui peuvent être choisies plus ou moins grandes dans certaines limites.

Les surfaces d'appui comportent également des surfaces de contact entre les chapes réalisées aux extrémités de chaque coquille. Toutefois, les recouvrements des chapes des deux coquilles s'avèrent avantageux essentiellement pour épaissir les chapes de la bielle en créant localement une sur-épaisseur qui améliore la résistance de chaque chape de la bielle 2 et en augmentant la surface de matage du trou de la chape ce qui est favorable à un meilleur comportement structural de la bielle.

Avantageusement cette longueur de recouvrement, donc la surface de contact entre les deux coquilles 3a, 3b, est choisie afin que la résistance de l'assemblage des dites deux coquilles soit adaptée d'une part aux efforts que la bielle 2 doit subir et d'autre part au procédé mis en oeuvre pour assembler les dites coquilles.

Dans un premier exemple de procédé d'assemblage, illustré figure 4b, des deux coquilles 3a, 3b, les dites deux coquilles sont collées au moyen d'un adhésif déposé sur les surfaces de contact 321a, 321b, 332a, 332b, des dites coquilles préalablement durcies au cours d'une opération de formage, puis les dites coquilles sont mises en contact pour former la bielle 2 et maintenues en position jusqu'à ce que l'adhésif assure l'assemblage des deux coquilles.

Dans un deuxième exemple de procédé d'assemblage, illustré sur la figure 4c, lorsque les coquilles 3a, 3b, sont réalisées avec un matériau composite utilisant des fibres préimprégnées par une résine durcissable par polymérisation, les dites coquilles sont placées avant durcissement complet dans un outillage puis polymérisées ensemble, au moins au cours d'une phase terminale de polymérisation de la résine, ce qui permet aux dites deux coquilles d'être assemblées. Une telle technique est généralement désignée co-cuisson dans la réalisation des assemblages d'éléments en matériaux composites thermodurcissables.

Dans ces exemples de procédé d'assemblage mettant en oeuvre des techniques de collage ou de co-cuisson, il peut s'avérer nécessaire d'exercer une pression importante entre les surfaces devant adhérer 321a, 332b et 321b, 332a, qui en raison de la souplesse relative des parois des coquilles nécessite de maintenir les prolongements 32a, 33b d'une part et 32b, 33a d'autre part entre des moyens de serrage.

De tels moyens de serrage consistent par exemple en un outillage rigide représentant une forme en creux de la bielle 2 dans lequel ladite bielle est placée et une vessie qui est placée dans la partie creuse de la bielle 2 puis gonflées pour appliquer une pression sur les prolongements des coquilles dont la forme est garantie par l'outillage rigide.

Dans un troisième exemple de procédé d'assemblage, applicable lorsque les coquilles sont réalisées avec un matériau thermoplastique, les coquilles préalablement formées sont assemblées par soudage thermoplastique, par exemple un soudage par ultrason.

Dans un quatrième exemple de procédé d'assemblage, les coquilles préalablement durcies sont assemblées mécaniquement au moyen de fixations, par exemple des rivets.

D'autres procédés d'assemblage capable de solidariser les deux coquilles 3a, 3b sont utilisables et en particulier en fonction de la technologie de matériau composite utilisée pour réaliser les dites coquilles des combinaisons des divers exemples de procédés d'assemblage cités peuvent être combinés.

Il est cependant notable que les zones d'assemblage déterminées par les surfaces de contact entre les coquilles 3a, 3b sont soumises à des efforts faibles dans le sens principal de chargement de la bielle 2, c'est à dire suivant la direction de l'axe 22 de la bielle, ce qui détermine éventuellement le choix d'un procédé préféré d'assemblage dans des cas particuliers.

Dans une troisième étape un usinage des chapes, en particulier l'alésage des ouvertures dans les chapes, est réalisé ainsi que d'éventuelles opérations de finition.

La bielle suivant l'invention ainsi que le procédé de réalisation d'une telle bielle ne se limite pas à des bielles obtenues au moyen de deux coquilles identiques telles que décrites. D'autres formes peuvent être réalisées suivant l'enseignement de l'invention.

Ainsi une bielle peut être réalisée par un assemblage de deux coquilles de sections différentes telles que l'une des coquilles se trouve encastrée dans l'autre coquille.

Dans ce cas les coquilles sont assemblées avec deux surfaces d'appui extérieures d'une coquille en contact avec deux surfaces d'appui intérieures de l'autre coquille comme illustré sur la figure 6.

Une bielle suivant l'invention peut également ne pas avoir une section sensiblement constante comme dans le cas décrit de manière détaillée mais au contraire présenter une section droite sensiblement évolutive comme par exemple avec une certaine section à mi-distance des extrémités de la bielle section diminuant de manière plus ou moins régulière en se rapprochant des extrémités.

Une bielle peut également être réalisée par l'assemblage de plusieurs coquilles, trois, comme illustré sur les figures 7a et 7b, ou plus, afin d'utiliser des moyens de productions disponibles ou lorsque la bielle, par exemple par ses dimensions, s'avère plus simple à réaliser en plus de deux coquilles.

Dans ces cas des adaptations peuvent s'avérer nécessaires par rapport à l'exemple décrit sans remettre en cause les principes de la bielle et de son procédé de réalisation.

Le procédé est applicable à la réalisation d'une bielle en matériau composite obtenue par assemblage de deux ou plusieurs coquilles sans chape, des moyens de fixation de la bielle à la structure étant alors rapportés et solidarisés à la bielle après la réalisation du corps de la bielle conformément à l'invention.

La bielle obtenue et son procédé de fabrication présente de nombreux avantages dont la possibilité de réaliser une bielle en matériau composite de manière simplifiée par rapport au techniques connues et sans nécessiter de mettre en oeuvre des procédés complexes et coûteux.

## Revendications

1. Bielle structurale (2) de forme allongée suivant un axe (22), comportant une zone centrale (21) creuse, dite corps, de section droite par rapport à l'axe (22) fermée, réalisée essentiellement avec un matériau composite comportant des fibres maintenues dans une résine durcie, entre une première extrémité (23), comportant des premiers moyens de fixation de la bielle (2) à une structure, et une seconde extrémité (24), comportant des seconds moyens de fixation de la bielle (2) à une structure, **caractérisée en ce que** ladite bielle structurale comporte, au moins pour une partie structurale du corps (21), au moins deux coquilles (3a, 3b), (3c) réalisée en matériaux composite assemblées et dans laquelle chaque coquille (3a, 3b, 3c) :
- s'étend suivant la direction de l'axe (22) sur une longueur au moins égale à une longueur du corps (21) de la bielle (2) ;
- présente une section droite par rapport à l'axe (22) ouverte déterminant une face intérieure, concave, (31a, 31b, 31c) et une face extérieure, convexe, sur une face opposée à la face intérieure concave ;
- comporte une première surface d'appui (321 a, 321 b, 321 c), sur une face de la coquille, au niveau d'un premier prolongement (32a, 32b, 32c) d'un bord de la coquille ;
- comporte une seconde surface d'appui (332a, 332b, 332c), sur une autre face de la coquille, au niveau d'un second prolongement (33a, 33b, 33c) d'un bord de la coquille, second prolongement opposé au premier prolongement sur une section droite de la coquille ;
et dans laquelle chaque coquille (3a, 3b, 3c) est assemblée avec une coquille voisine de telle sorte que la première surface d'appui (332a, 332b, 332) d'une coquille se trouve en appui sur la seconde surface d'appui (321a, 321b, 321c) de la coquille voisine, les deux ou plusieurs coquilles assemblées constituant le corps de la bielle (2) et créant une section droite fermée.

2. Bielle structurale suivant la revendication 1 dans laquelle la première surface d'appui (321a, 321 b, 321c) de chaque coquille (3a, 3b, 3c) est une surface d'appui extérieure située sur la face extérieure de la coquille considérée et dans laquelle la seconde surface d'appui (332a, 332b, 332c) de chaque coquille est une surface d'appui intérieure située sur la face intérieure de la coquille considérée.

3. Bielle structurale suivant la revendication 1 ou la revendication 2 dans laquelle au moins une coquille (3a, 3b) comporte une ou des chapes (231a, 231b, 232a, 232b, 241a, 241b, 242a, 242b) en matériau composite solidaires de ladite coquille.

4. Bielle structurale suivant la revendication 3 dans laquelle au moins une chape est obtenue par l'assemblage d'au moins deux chapes (231a, 232b), (232a, 231b), (241a, 242b), (242a, 241 b) solidaires de coquilles différentes.

5. Bielle structurale suivant l'une des revendications 2, 3 ou 4 dans laquelle toutes les coquilles sont, à des détails de réalisation près, identiques.

6. Bielle structurale suivant la revendication 5 comportant deux coquilles sensiblement identiques comportant chacune deux chapes à chaque extrémité, chaque chape d'une coquille coopérant avec une chape de l'autre coquille pour former une chape de la bielle.

7. Bielle structurale suivant l'une des revendications précédentes dans laquelle la résine du matériau composite est une résine durcie par polymérisation dite thermodurcissable.

8. Bielle structurale suivant l'une des revendications 1 à 6 dans laquelle la résine du matériau composite est une résine durcie par refroidissement dite thermoplastique.

9. Bielle structurale suivant l'une des revendications précédentes dans laquelle les coquilles sont maintenues par collage.

10. Bielle structurale suivant l'une des revendications 1 à 7 dans laquelle les coquilles sont maintenues par une polymérisation simultanée de la résine.

11. Bielle structurale suivant l'une des revendications précédentes dans laquelle les coquilles sont maintenues par des éléments mécaniques de fixation.

12. Procédé de réalisation d'une bielle structurale (2) de forme allongée suivant un axe (22), comportant une zone centrale (21) creuse, dite corps, de section droite par rapport à l'axe (22) fermée, réalisée essentiellement avec un matériau composite comportant des fibres maintenues dans une résine durcie, entre une première extrémité (23), comportant des premiers moyens de fixation de la bielle (2) à une structure, et une seconde extrémité (24), comportant des seconds moyens de fixation de la bielle (2) à une structure, **caractérisé en ce que** ledit procédé comporte une étape de réalisation d'au moins deux coquilles (3a, 3b), (3c) en matériau composite ;
- ayant une extension suivant la direction de l'axe (22) sur une longueur au moins égale à une longueur du corps (21) de la bielle (2) ;
- présentant une section droite par rapport à l'axe (22) ouverte déterminant une face intérieure, concave, (31a, 31b, 31c) et une face extérieure, convexe, sur une face opposée à la face intérieure concave ;
- comportant une première surface d'appui (321a, 321b, 321c), sur une face de la coquille, au niveau d'un premier prolongement (32a, 32b, 32c) d'un bord de la coquille ;
- comportant une seconde surface d'appui (332a, 332b, 332c), sur une autre face de la coquille, au niveau d'un second prolongement (33a, 33b, 33c) d'un bord de la coquille, second prolongement opposé au premier prolongement sur une section droite de la coquille ;
et **en ce que** le dit procédé comporte une étape ultérieure d'assemblage d'au moins deux coquilles préalablement réalisées, une coquille étant assemblée avec une coquille voisine de telle sorte que sa première surface d'appui (332a, 332b, 332) se trouve en appui sur la seconde surface d'appui (321a, 321b, 321c) de la coquille voisine, les deux ou plusieurs coquilles assemblées constituant le corps de la bielle (2) et créant une section droite fermée.

13. Procédé suivant la revendication 12 dans lequel les coquilles sont réalisées par polymérisation de fibres préimprégnées d'une résine durcissant par polymérisation déposées sur une forme correspondant à la forme de la coquille à réaliser.

14. Procédé suivant la revendication 12 dans lequel les coquilles sont réalisées par polymérisation d'une résine durcissant par polymérisation après avoir été transférée dans une préforme en fibres sèches déposées dans un moule.

15. Procédé suivant la revendication 12 dans lequel les coquilles sont réalisées par formage au cours d'une étape d'élévation de température de flans réalisés dans un matériau composite ayant des propriétés thermoplastiques.

16. Procédé suivant la revendication 13 dans lequel les coquilles sont assemblées par un procédé comportant une phase de polymérisation simultanée des coquilles ayant des surfaces d'appui en contact.

17. Procédé suivant la revendication 15 dans lequel les coquilles sont assemblées par un procédé soudage thermoplastique.

18. Procédé suivant l'une des revendications 12 à 17 dans lequel les coquilles sont assemblées par collage.

19. Procédé suivant l'une des revendications 12 à 18 dans lequel les coquilles sont assemblées par la pose de fixations mécaniques.

## Patentansprüche

1. Strukturelle Stange (2) mit länglicher Form längs einer Achse (22), die zwischen einem ersten Ende (23), das erste Mittel für die Befestigung der Stange (2) an einer Struktur aufweist, und einem zweiten Ende (24), das zweite Mittel für die Befestigung der Stange (2) an einer Struktur aufweist, eine hohle Mittelzone (21), die Körper genannt wird, umfasst, die einen geschlossenen und in Bezug auf die Achse (22) geraden Abschnitt aufweist, der im Wesentlichen aus einem Verbundmaterial verwirklicht ist, das Fasern, die in einem gehärteten Harz gehalten werden, aufweist, **dadurch gekennzeichnet, dass** die strukturelle Stange wenigstens für einen strukturellen Teil des Körpers (21) wenigstens zwei Schalen (3a, 3b), (3c) umfasst, die aus zusammengefügten Verbundmaterialien verwirklicht sind, wobei jede Schale (3a, 3b, 3c):
- sich in Richtung der Achse (22) über eine Länge erstreckt, die wenigstens gleich einer Länge des Körpers (21) der Stange (2) ist;
- einen offenen, in Bezug auf die Achse (22) geraden Abschnitt aufweist, der eine konkave Innenseite (31a, 31b, 31c) und auf einer der konkaven Innenseite gegenüberliegenden Seite eine konvexe Außenseite bestimmt;
- eine erste Abstützoberfläche (321a, 321b, 321c) auf einer Seite der Schale auf Höhe einer ersten Verlängerung (32a, 32b, 32c) eines Randes der Schale aufweist;
- eine zweite Abstützoberfläche (332a, 332b, 332c) auf einer anderen Seite der Schale auf Höhe einer zweiten Verlängerung (33a, 33b, 33c) eines Randes der Schale aufweist, wobei sich die zweite Verlängerung auf einem geraden Abschnitt der Schale gegenüber der ersten Verlängerung befindet;
und wobei jede Schale (3a, 3b, 3c) mit einer benachbarten Schale in der Weise zusammengefügt ist, dass sich die erste Abstützoberfläche (321a, 321b, 321c) einer Schale auf der zweiten Abstützoberfläche (332a, 332b, 332c) der benachbarten Schale abstützt, wobei die zwei oder mehr zusammengefügten Schalen den Körper der Stange (2) bilden und einen geschlossenen geraden Abschnitt erzeugen.

2. Strukturelle Stange nach Anspruch 1, wobei die erste Abstützoberfläche (321a, 321b, 321c) jeder Schale (3a, 3b, 3c) eine äußere Abstützoberfläche ist, die sich auf der Außenseite der betrachteten Schale befindet, und wobei die zweite Abstützoberfläche (332a, 332b, 332c) jeder Schale eine innere Abstützoberfläche ist, die sich auf der Innenseite der betrachteten Schale befindet.

3. Strukturelle Stange nach Anspruch 1 oder Anspruch 2, wobei wenigstens eine Schale (3a, 3b) einen oder mehrere Gabelköpfe (231a, 231b, 232a, 232b, 241a, 241b, 242a, 242b) aus einem Verbundmaterial, die mit der Schale fest verbunden sind, umfasst.

4. Strukturelle Stange nach Anspruch 3, wobei wenigstens ein Gabelkopf durch Zusammenfügen von wenigstens zwei Gabelköpfen (231a, 232b), (232a, 231b), (241a, 242b), (242a, 241b), die mit verschiedenen Schalen fest verbunden sind, erhalten wird.

5. Strukturelle Stange nach einem der Ansprüche 2, 3 oder 4, wobei sämtliche Schalen bis auf Ausführungseinzelheiten gleich sind.

6. Strukturelle Stange nach Anspruch 5, die zwei im Wesentlichen gleiche Schalen umfasst, die an jedem Ende jeweils zwei Gabelköpfe aufweist, wobei jeder Gabelkopf einer Schale mit einem Gabelkopf der anderen Schale zusammenwirkt, um einen Gabelkopf der Stange zu bilden.

7. Strukturelle Stange nach einem der vorhergehenden Ansprüche, wobei das Harz des Verbundmaterials ein durch Polymerisation gehärtetes Harz, ein so genanntes thermohärtbares Harz, ist.

8. Strukturelle Stange nach einem der Ansprüche 1 bis 6, wobei das Harz des Verbundmaterials ein durch Abkühlen gehärtetes Harz, ein so genanntes thermoplastisches Harz, ist.

9. Strukturelle Stange nach einem der vorhergehenden Ansprüche, wobei die Schalen durch Kleben gehalten werden.

10. Strukturelle Stange nach einem der Ansprüche 1 bis 7, wobei die Schalen durch eine gleichzeitige Polymerisation des Harzes gehalten werden.

11. Strukturelle Stange nach einem der vorhergehenden Ansprüche, wobei die Schalen durch mechanische Befestigungselemente gehalten werden.

12. Verfahren zum Herstellen einer strukturellen Stange (2) mit lang gestreckter Form längs einer Achse (22), die zwischen einem ersten Ende (23), das erste Mittel für die Befestigung der Stange (2) an einer Struktur aufweist, und einem zweiten Ende (24), das zweite Mittel für die Befestigung der Stange (2) an einer Struktur aufweist, eine hohle Mittelzone (21), die Körper genannt wird, umfasst, der einen geschlossenen und in Bezug auf die Achse (22) geraden Abschnitt aufweist und im Wesentlichen aus einem Verbundmaterial gebildet ist, das Fasern, die in einem gehärteten Harz gehalten werden, aufweist, **dadurch gekennzeichnet, dass** das Verfahren einen Schritt des Herstellens wenigstens zweier Schalen (3a, 3b), (3c) aus einem Verbundmaterial umfasst:
- die eine Erstreckung in Richtung der Achse (22) auf einer Länge haben, die wenigstens gleich einer Länge des Körpers (21) der Stange (2) ist;
- die einen offenen, in Bezug auf die Achse (22) geraden Abschnitt aufweisen, der eine konkave Innenseite (31a, 31b, 31c) und eine konvexe Außenseite auf einer Seite gegenüber der konkaven Innenseite bestimmt;
- die eine erste Abstützoberfläche (321a, 321b, 321c) auf einer Seite der Schale auf Höhe einer ersten Verlängerung (32a, 32b, 32c) eines Randes der Schale aufweisen;
- die eine zweite Abstützoberfläche (332a, 332b, 332c) auf einer anderen Seite der Schale auf Höhe einer zweiten Verlängerung (33a, 33b, 33c) eines Randes der Schale aufweisen, wobei sich die zweite Verlängerung auf einem geraden Abschnitt der Schale gegenüber der ersten Verlängerung befindet;
und dass das Verfahren einen späteren Schritt des Zusammenfügens von wenigstens zwei im Voraus verwirklichten Schalen umfasst, wobei eine Schale mit einer benachbarten Schale in der Weise zusammengefügt wird, dass sich ihre erste Abstützoberfläche (321a, 321b, 321c) auf der zweiten Abstützoberfläche (332a, 332b, 332c) der benachbarten Schale abstützt, wobei die zwei oder mehreren zusammengefügten Schalen den Körper der Stange (2) bilden und einen geschlossenen geraden Abschnitt erzeugen.

13. Verfahren nach Anspruch 12, wobei die Schalen durch Polymerisation vorimprägnierter Fasern eines durch Polymerisation härtenden Harzes verwirklicht werden, die auf einer Form abgelegt werden, die der Form der zu verwirklichenden Schale entspricht.

14. Verfahren nach Anspruch 12, wobei die Schalen durch Polymerisation eines Harzes verwirklicht werden, das durch Polymerisation härtet, nachdem es in eine Vorform aus Trockenfasern, die in einer Gießform abgelegt sind, umgeladen worden ist.

15. Verfahren nach Anspruch 12, wobei die Schalen durch Formgebung während eines Schrittes des Erhöhens der Temperatur von Rohlingen, die aus einem thermoplastische Eigenschaften aufweisenden Verbundmaterial verwirklicht sind, hergestellt werden.

16. Verfahren nach Anspruch 13, wobei die Schalen durch ein Verfahren zusammengefügt werden, das eine Phase des gleichzeitigen Polymerisierens der Schalen, die in Kontakt befindliche Abstützoberflächen haben, umfasst.

17. Verfahren nach Anspruch 15, wobei die Schalen durch ein Verfahren eines thermoplastischen Schweißens zusammengefügt werden.

18. Verfahren nach einem der Ansprüche 12 bis 17, wobei die Schalen durch Kleben zusammengefügt werden.

19. Verfahren nach einem der Ansprüche 12 bis 18, wobei die Schalen durch Verwenden mechanischer Befestigungen zusammengefügt werden.

## Claims

1. Structural connecting rod (2) of elongate form along an axis (22), comprising a hollow central zone (21), called body, of a sealed cross section relative to the material axis (22), produced mainly with a composite comprising fibers held in a hardened resin, between a first end (23), comprising first means of fixing the connecting rod (2) to a structure, and a second end (24), comprising second means for fixing the connecting rod (2) to a structure, **characterized in that** said structural connecting rod comprises, at least for a structural portion of the body (21), at least two assembled shells (3a, 3b), (3c) produced from a composite material, and in which each shell (3a, 3b, 3c):
- extends in the direction of the axis (22) over a length at least equal to a length of the body (21) of the connecting rod (2);
- has an open cross section relative to the axis (22) determining a concave internal face (31a, 31b, 31c) and a convex external face, on a face opposite to the concave internal face;
- comprises a first bearing surface (321a, 321b, 321c), on one face of the shell, at the level of a first extension (32a, 32b, 32c) of an edge of the shell;
- comprises a second bearing surface (332a, 332b, 332c), on another face of the shell, at the level of a second extension (33a, 33b, 33c) of an edge of the shell, the second extension being opposite to the first extension over a cross section of the shell;
and in which each shell (3a, 3b, 3c) is assembled with an adjacent shell so that the first bearing surface (321a, 321b, 321c) a of shell is bearing on the second bearing surface (332a, 332b, 332c) of the adjacent shell, the two or more assembled shells forming the body of the connecting rod (2) and creating a sealed cross section.

2. Structural connecting rod according to Claim 1, in which the first bearing surface (321a, 321b, 321c) of each shell (3a, 3b, 3c) is an external bearing surface situated on the external face of the shell concerned and in which the second bearing surface (332a, 332b, 332c) of each shell is an internal bearing surface situated on the internal face of the shell concerned.

3. Structural connecting rod according to Claim 1 or Claim 2, in which at least one shell (3a, 3b) comprises one or more clevis joints (231a, 231b, 232a, 232b, 241a, 241b, 242a, 242b) made of a composite joined to said shell.

4. Structural connecting rod according to Claim 3, in which at least one clevis joint is obtained by the assembly of at least two clevis joints (231a, 232b), (232a, 231b), (241a, 242b), (242a, 241b) joined to different shells.

5. Structural connecting rod according to one of Claims 2, 3 or 4, in which all the shells are, production details apart, identical.

6. Structural connecting rod according to Claim 5 comprising two substantially identical shells, each comprising two clevis joints at each end, each clevis joint of a shell cooperating with a clevis joint of the other shell to form a clevis joint for the connecting rod.

7. Structural connecting rod according to one of the preceding claims, in which the resin of the composite is a resin hardened by polymerization, called thermosetting.

8. Structural connecting rod according to one of Claims 1 to 6, in which the resin of the composite is a resin hardened by cooling, called thermoplastic.

9. Structural connecting rod according to one of the preceding claims, in which the shells are secured by gluing.

10. Structural connecting rod according to one of Claims 1 to 7, in which the shells are maintained by simultaneous polymerization of the resin.

11. Structural connecting rod according to one of the preceding claims, in which the shells are maintained by mechanical fixing elements.

12. Method of producing a structural connecting rod (2) of elongate form along an axis (22), comprising a hollow central zone (21), called body, of sealed cross section relative to the axis (22), produced mainly with a composite material comprising fibers held in a hardened resin, between a first end (23), comprising first means of fixing the connecting rod (2) to a structure, and a second end (24), comprising second means of fixing the connecting rod (2) to a structure, **characterized in that** said method comprises a step for producing at least two shells (3a, 3b), (3c) with a composite material:
- having an extension in the direction of the axis (22) over a length at least equal to a length of the body (21) of the connecting rod (2);
- presenting an open cross section relative to the axis (22) determining a concave internal face (31a, 31b, 31c) and a convex external face, on a face opposite to the concave internal face;
- comprising a first bearing surface (321a, 321b, 321c), on one face of the shell, at the level of the first extension (32a, 32b, 32c) of an edge of the shell;
- comprising a second bearing surface (332a, 332b, 332c), on another face of the shell, at the level of a second extension (33a, 33b, 33c) of an edge of the shell, the second extension being opposite to the first extension over a cross section of the shell;
and **in that** said method comprises a further step for assembling at least two previously produced shells, a shell being assembled with an adjacent shell so that its first bearing surface (321a, 321b, 321c) is bearing on the second bearing surface (332a, 332b, 332c) of the adjacent shell, the two or more assembled shells forming the body of the connecting rod (2) and creating a sealed straight section.

13. Method according to Claim 12, in which the shells are produced by polymerization of fibers preimpregnated with a resin hardened by polymerization deposited in a form corresponding to the form of the shell to be produced.

14. Method according to Claim 12, in which the shells are produced by polymerization of a resin hardened by polymerization after having been transferred into a preform of dry fibers deposited in a mold.

15. Method according to Claim 12, in which the shells are produced by forming, during a step where the temperature is raised, of blanks produced in a composite material having thermoplastic properties.

16. Method according to Claim 13, in which the shells are assembled by a method comprising a phase of simultaneous polymerization of the shells having bearing surfaces in contact.

17. Method according to Claim 15, in which the shells are assembled by a thermoplastic welding method.

18. Method according to one of Claims 12 to 17, in which the shells are assembled by gluing.

19. Method according to one of Claims 12 to 18, in which the shells are assembled by fitting mechanical fixings.
